# EUROPÄISCHE PATENTANMELDUNG

(11) **EP 1 300 287 A2**
(43) Veröffentlichungstag der Anmeldung: **09.04.2003**
(21) Anmeldenummer: 02018681.3
(22) Anmeldetag: 21.08.2002
(51) Int. Cl.: B60Q 1/10

(54) **Vorrichtung und Verfahren zur Bestimmung der Längsneigung eines Fahrzeugs und zur Leuchtweitenregulierung**

(30) Priorität: 28.09.2001 DE 10148202
(71) Anmelder: AUDI AG, 85045 Ingolstadt (DE)
(72) Erfinder: Kahne, Thomas, 85296 Rohrbach (DE)
(74) Vertreter: Thielmann, Frank

(57) **Zusammenfassung**

Die Erfindung betrifft eine Vorrichtung zur Ermittlung der Längsneigung eines Fahrzeugs (5), die dadurch gekennzeichnet ist, dass diese zumindest eine Sensorvorrichtung (1, 1') umfasst, die zumindest im Bereich zwischen dem vorderen Ende der Karosserie des Fahrzeugs (5) und der Vorderachse oder im Bereich zwischen dem hinteren Ende der Karosserie des Fahrzeugs (5) und der Hinterachse vorgesehen ist. Weiterhin bezieht sich die Erfindung auf ein Verfahren zur Bestimmung des Neigungswinkels eines Fahrzeugs (5), wobei das Verfahren umfasst, dass von mindestens einer Sensorvorrichtung (1, 1'), die zumindest im Bereich zwischen dem vorderen Ende der Karosserie des Fahrzeugs (5) und der Vorderachse oder im Bereich zwischen dem hinteren Ende der Karosserie des Fahrzeugs (5) und der Hinterachse vorgesehen ist, mindestens ein Messwert, der den Abstand des Fahrzeugs zu der Fahrbahnoberfläche wiedergibt, ermittelt wird, dieser an eine Verarbeitungseinheit weitergeleitet wird und in dieser Verarbeitungseinheit der Neigungswinkel aus den ermittelten Messwerten bestimmt wird. Diese Verfahren kann auch für die Leuchtweitenregulierung der Scheinwerfer eines Fahrzeugs vorteilhaft eingesetzt werden.

## Beschreibung

Die Erfindung betrifft eine Vorrichtung und ein Verfahren zur Bestimmung der Längsneigung eines Fahrzeugs und zur Leuchtweitenregulierung

Die Längsneigung eines Fahrzeugs wird durch verschiedene Faktoren, wie beispielsweise den Beladungszustand und die Beschleunigung oder die Verzögerung des Fahrzeugs, sowie beispielsweise durch den Abflachungsgrad der Reifen beeinflusst.

Mit der Längsneigung des Fahrzeugs veränders sich sein fahrdynamisches Verhalten; Beeinflußt werden auch andere Fahrzeugcharakteristiken, beispielsweise der Winkel der Abstrahlung der Scheinwerfer, insbesondere der Frontscheinwerfer des Fahrzeugs. Aus diesem Grund ist es wünschenswert, die Längsneigung des Fahrzeugs erfassen zu können. Eine Vorrichtung zum Erfassen der Längsneigung ist beispielsweise aus der DE 198 60 400 A1 bekannt. Hierbei werden für ein Verfahren zur Bereitstellung einer die Längsneigung eines Fahrzeugs darstellenden Größe Vorrichtungen wie Hall-Sensoren verwendet. Es werden auch Torsionsstäbe beschrieben, die über Lenker an den Rädern des Fahrzeugs angelenkt sind. Weiterhin wird die Verwendung von Ultraschallsensoren beschrieben, die im Bereich der Vorderachse und der Hinterachse vorgesehen sind.

Der Nachteil der bisher bekannten Vorrichtungen und Verfahren ist, dass die Vorrichtung mittels derer die Längsneigung ermittelt werden soll, an zumindest einer der Achsen des Fahrzeugs befestigt ist, bzw. in der Nähe der Achse angebracht ist. Hierdurch ist der Abstand zwischen den Messpunkten relativ gering und die Messung des Neigungswinkels, insbesondere auch geringer Neigungswinkel, daher nicht genau.

Aufgabe der Erfindung ist es, eine Vorrichtung und ein Verfahren zu schaffen, mit denen die Längsneigung eines Fahrzeugs zuverlässig ermittelt werden kann und bei denen durch das Vorsehen der Vorrichtung keine unnötigen negativen Einflüsse auf die Fahrzeugeigenschaften, wie das Gewicht, auftreten.

Der Erfindung liegt die Erkenntnis zugrunde, dass diese Aufgabe dadurch ideal gelöst werden kann, dass Sensorvorrichtungen an Stellen des Fahrzeugs angebracht werden, die einen optimalen Abstand voneinander aufweisen.

Die Aufgabe wird daher erfindungsgemäß durch eine Vorrichtung zur Ermittlung der Längsneigung eines Fahrzeugs gelöst, die dadurch gekennzeichnet ist, dass diese zumindest eine Sensorvorrichtung umfasst, die zumindest im Bereich zwischen dem vorderen Ende der Karosserie des Fahrzeugs und der Vorderachse oder im Bereich zwischen dem hinteren Ende der Karosserie des Fahrzeugs und der Hinterachse vorgesehen ist.

Bei dieser Anordnung ist es wesentlich, dass die Sensorvorrichtung also nicht an der Vorder- oder Hinterachse vorgesehen ist und sich auch nicht zwischen diesen beiden Achsen befindet. Durch die Anordnung der Sensorvorrichtung, die vorzugsweise zur Abstandsmessung dient, an einer der äußeren Stellen in Längsrichtung des Fahrzeugs, kann mittels der Sensorvorrichtung ein Wert ermittelt werden, der verglichen mit einem vorgegebenen Vergleichswert eine präzise Bestimmung der Längsneigung des Fahrzeugs ermöglicht. Dies folgt aus der Tatsache, dass sich eine Neigung des Fahrzeugs in dem vorderen Bereich des Fahrzeugs und/oder dem hinteren Bereich des Fahrzeugs in einer maximalen Erhöhung bzw. Erniedrigung der Karosserie wiederspiegelt.

Im Sinne dieser Erfindung werden die Angaben "vorne" und "hinten" bezüglich der Längsrichtung des Fahrzeugs verwendet, wobei das vordere Ende das in Fahrtrichtung gerichtete Ende des Fahrzeugs bezeichnet.

In einer bevorzugten Ausführungsform weist die Vorrichtung mindestens zwei Sensorvorrichtungen auf, wobei mindestens eine der Sensorvorrichtungen im Bereich zwischen dem vorderen Ende der Karosserie des Fahrzeugs und der Vorderachse und die mindestes eine weitere der Sensorvorrichtungen im Bereich zwischen dem hinteren Ende der Karosserie des Fahrzeugs und der Hinterachse vorgesehen ist.

Hierdurch kann der Längsneigungswinkel des Fahrzeugs über eine längere Abstützlänge bzw. Abstützbasis, die sich im wesentlichen über die gesamte Fahrzeuglänge erstreckt, bestimmt werden. Durch diese lange Messstrecke wird der ermittelte Wert daher genauer. Zur Ermittlung der Längsneigung aus den von den Sensorvorrichtungen erfassten Werten können diese einer Differenzbildung unterzogen werden, deren Resultat dann unter Berücksichtigung des Abstands der Sensorvorrichtungen in der Längsrichtung des Fahrzeugs in eine Längsneigung umgerechnet werden kann.

Vorzugsweise ist die Sensorvorrichtung im Bereich des Stoßfängers, beispielsweise in die Außenseite des Stoßfängers oder auf dem Stoßfängerquerträger, vorgesehen. Für den letztgenannten Fall ist das Sensorsignal kunststoffdurchdringend auszuführen. Im Bereich des Stoßfängers sind eine Anzahl von Armaturen vorgesehen, wie beispielsweise Beleuchtungseinrichtungen oder andere Sensorvorrichtungen, wie beispielsweise Temperatursensoren. In dieser Position können daher Sensorvorrichtungen zur Bestimmung der Längsneigung leicht eingegliedert werden, ohne einen zusätzliche Verkabelungs- und/oder Befestigungsaufwand zu verursachen. Zudem stellen die Stoßfänger in der Regel das vordere und hintere Ende des Fahrzeugs dar, wodurch die Abstützlänge maximiert wird.

Die Sensorvorrichtung umfasst vorzugsweise zumindest einen Sender und einen Empfänger. Über den Sender können Signale, z.B. in Form von Ultraschall-Wellen ausgesandt werden, die gegen die Fahrbahnoberfläche gerichtet sind und an dieser Fahrbahnoberfläche reflektiert werden. Der Empfänger kann dann so ausgelegt sein, dass dieser die reflektierten Signale empfängt. Die gesandten und empfangenen Signale können dann ausgewertet werden, um so den aktuellen Abstand der Position der Sensorvorrichtung von der Fahrbahnoberfläche zu bestimmen.

Es kann mindestens eine Verarbeitungseinheit vorgesehen sein, die zur Auswertung und Verarbeitung der von den Sensorvorrichtungen ermittelten Werten mit den Sensorvorrichtungen verbunden sein kann. In der Verarbeitungseinheit kann beispielsweise die Längsneigung des Fahrzeugs bestimmt werden. Sofern die von der Sensorvorrichtung gesandten und empfangenen Werte nicht bereits in der Sensorvorrichtung selber in einen Abstandswert, d.h. dem Abstand zu einem Objekt oder der Fahrbahnoberfläche umgewandelt wurde, kann diese Umwandlung in der Verarbeitungseinheit geschehen.

Die Einheit kann auch mit zumindest einer der Sensorvorrichtungen in einem gemeinsamen Gehäuse vorgesehen sein.

Die Sensorvorrichtung kann somit die Messwerte erfassen, die den Abstand von mindestens einem Punkt der Karoserie des Fahrzeugs zu einer Fahrbahnoberfläche, auf der sich das Fahrzeug befindet, darstellen. Durch diese Bestimmung können auch Faktoren, wie beispielsweise eine Reifenabflachung berücksichtigt werden, die bei einer reinen Messung zwischen der Karosserie und einer Fahrzeugachse nicht möglich wäre. Die Abstandsmessung wird in einer Richtung durchgeführt, die im wesentlichen senkrecht zu der Längsrichtung des Fahrzeugs steht und in die Richtung der Fahrbahnoberfläche gerichtet ist.

Die Sensorvorrichtung umfasst vorzugsweise einen Ultraschallsensor. Es ist aber auch möglich einen anderen Sensor, wie beispielsweise einen Mikrowellensensor zu verwenden.

In einer Ausführungsform der Erfindung ist die Vorrichtung mit einer Steuereinheit zur Leuchtweitenregulierung verbunden. Durch diese Verbindung können die von der Sensorvorrichtung der Vorrichtung zur Ermittlung der Längsneigung erfassten Messwerte, unmittelbar oder nach Verarbeitung zu einem Längsneigungswert an die Steuereinheit zur Leuchtweitenregulierung geleitet werden und beispielsweise die Ausrichtung der Frontscheinwerfer entsprechend der Längsneigung des Fahrzeugs eingestellt werden.

Vorzugsweise ist die Sensorvorrichtung bezüglich der Richtung, in der diese Messungen durchführen kann, verstellbar. Durch diese Verstellbarkeit kann neben der Abstandsmessung zu der Fahrbahnoberfläche auch der Abstand zu einem vor oder hinter dem Fahrzeug befindlichen Objekt gemessen werden. Insbesondere ist bei einer solchen Ausführungsform bevorzugt, dass die Sensorvorrichtung zusätzlich mit einer Steuervorrichtung zur Einparkhilfe verbunden ist. Diese Kombination der Funktionen der Sensorvorrichtungen ist auch bezüglich der Gewichteinsparung von Bedeutung, da die Sensorvorrichtung sowohl dem Einparken, als auch beispielsweise der Einstellung der Leuchtweite der Frontscheinwerfer oder der Steuerung der Gierrate dienen kann und somit weitere Messeinrichtungen nicht notwendig sind.

Die Erfindung betrifft weiterhin ein Verfahren zur Bestimmung des Neigungswinkels eines Fahrzeugs, wobei das Verfahren umfasst, dass von mindestens einer Sensorvorrichtung, die zumindest im Bereich zwischen dem vorderen Ende der Karosserie des Fahrzeugs und der Vorderachse oder im Bereich zwischen dem hinteren Ende der Karosserie des Fahrzeugs und der Hinterachse vorgesehen ist, mindestens ein Messwert ermittelt wird, dieser an eine Verarbeitungseinheit weitergeleitet wird und in dieser Verarbeitungseinheit der Neigungswinkel aus den ermittelten Messwerten bestimmt wird.

Schließlich wird die Aufgabe, die der Erfindung zugrunde liegt, auch durch ein Verfahren zur Leuchtweitenregulierung gelöst, bei dem Messwerte, die von zumindest einer Sensorvorrichtung, die zumindest im Bereich zwischen dem vorderen Ende der Karosserie des Fahrzeugs und der Vorderachse oder im Bereich zwischen dem hinteren Ende der Karosserie des Fahrzeugs und der Hinterachse vorgesehen ist, ermittelt werden und an eine Verarbeitungseinheit zur Ermittlung der Längsneigung des Fahrzeugs geliefert werden, zur Steuerung der Leuchtweitenregulierung verwendet werden.

Die Erfindung wird im Folgenden anhand der beiliegenden Zeichnungen, die sich auf mögliche Ausführungsbeispiele der Erfindung beziehen, beschrieben. Es zeigen:
Figur 1: eine schematische Darstellung möglicher Einbauorte von Sensorvorrichtungen gemäß einer Ausführungsform der erfindungsgemäßen Vorrichtung;
Figur 2: eine schematische Schnittdarstellung eines Stoßfängers mit Einbauort der Sensorvorrichtung gemäß einer Ausführungsform der erfindungsgemäßen Vorrichtung;
Figur 3a: eine perspektivische Teilschnittansicht einer Ausführungsform der erfindungsgemäßen Vorrichtung; und
Figur 3b: eine Sensorvorrichtung gemäß der Ausführungsform in Figur 3a in zwei Rotationspositionen.

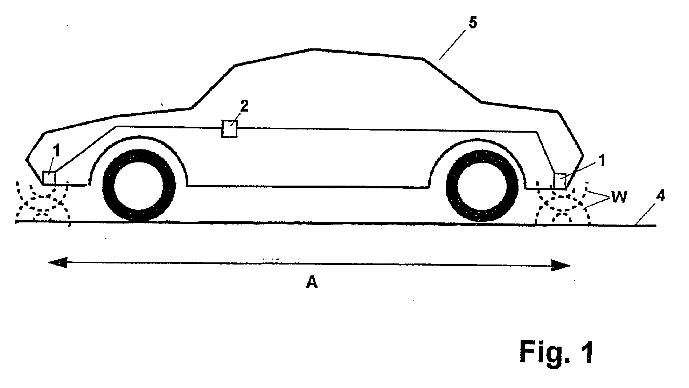

In Figur 1 ist ein Fahrzeug 5 dargestellt, bei dem im vorderen und hinteren Bereich jeweils eine Sensorvorrichtung 1, 1' angedeutet ist, die Bestandteile einer Vorrichtung zur Ermittlung der Längsneigung des Fahrzeugs sind. Außer den angedeuteten Sensorvorrichtungen 1, 1' können noch weitere Sensorvorrichtungen im vorderen oder hinteren Bereich der Fahrzeugkarosserie angeordnet sein. Vorzugsweise sind vorne und hinten jeweils zwei Sensoren angeordnet, die bezüglich der Breite des Fahrzeugs an den beiden Seiten vorgesehen sind. Die durch die Sensorvorrichtungen 1, 1' ausgestrahlten und an der Fahrbahnoberfläche 4 reflektierten Signale, z.B. in Form von Ultraschall-Wellen, sind in Figur 1 schematisch durch Halbkreise W angedeutet. Durch die Anordnung der Sensorvorrichtungen 1, 1' in dem vorderen und hinteren Bereich des Fahrzeugs 5, vorzugsweise in den Stoßfängern 3, wird eine große Abstützlänge A zwischen den Messpunkten geliefert. Durch diese große Abstützlänge A kann die Längsneigung des Fahrzeugs 5 zuverlässig gemessen werden, da der Unterschied des Abstandes der Karosserie zu der Fahrbahnoberfläche 4 im vorderen und hinteren Bereich des Fahrzeugs 5 durch die größere Abstützlänge A größer ist als in mittleren Bereichen des Fahrzeugs und somit auch geringere Neigungswinkel erfasst werden können.

Die Ermittlung der Längsneigung erfolgt vorzugsweise über eine Verarbeitungseinheit 2, die in Figur 1 schematisch dargestellt ist. Diese Verarbeitungseinheit 2 kann, sofern dies nicht bereits in der Sensorvorrichtung 1, 1' selber geschehen ist, auch zur Bestimmung des Abstands aus den von der Sensorvorrichtung ermittelten Werten dienen. Die Position der Verarbeitungseinheit 2 kann unterschiedlich gewählt werden. Diese kann beispielsweise in der Position vorgesehen sein, in der sich das Steuergerät des Motors befindet. Es ist aber auch möglich die Verarbeitungseinheit in der unmittelbaren Nähe einer der erfindungsgemäß verwendeten Sensorvorrichtungen 1, 1' vorzusehen. In diesem Fall kann die Verarbeitungseinheit mit der Sensorvorrichtung 1, 1' in einem Gehäuse aufgenommen sein. Diese letztere Anordnung der Verarbeitungseinheit 2 bietet sich insbesondere bei einer erfindungsgemäßen Vorrichtung an, bei der die Längsneigung nur über eine Sensorvorrichtung ermittelt wird und die von der Sensorvorrichtung erfassten Werte mit vorgegebenen Referenzwerten verglichen werden.

Die Sensorvorrichtungen 1, 1', die insbesondere dazu dienen, den Abstand eines Punkts des Fahrzeugs 5 zu der Fahrbahnoberfläche 4 zu ermitteln, sind vorzugsweise in den Stoßfängern 3 des Fahrzeugs 5 integriert bzw. eingebaut. Neben der dadurch erzielten maximalen Abstützlänge A zwischen der vorderen und der hinteren Sensorvorrichtung 1, 1', bieten die Stoßfänger 3 aufgrund der bereits darin vorgesehenen Vorrichtungen, wie Beleuchtungsmittel, einen idealen Einbauort, bei dem eine aufwändige Verkabelung mit langen zusätzlichen Kabeln entfallen kann und bereits vorgesehene Einbaumittel, wie beispielsweise Aussparungen, auch für die Sensorvorrichtungen 1, 1' verwendet werden können.

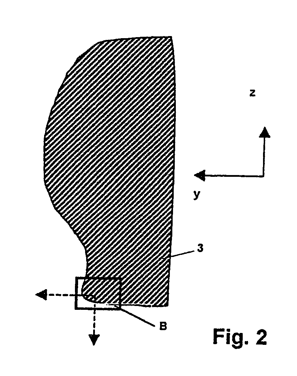

Ein möglicher Einbauort der Sensorvorrichtung in einem vorderen Stoßfänger 3 lässt sich der Figur 2 entnehmen. Der Stoßfänger 3 ist in einer Schnittansicht dargestellt. Die Fahrtrichtung ist mit y und die vertikal nach oben weisende Richtung des Fahrzeugs mit z angegeben. An der unteren vorderen Kante des Stoßfängers 3 ist der Bereich B eingezeichnet, in dem eine Sensorvorrichtung 1, 1' eingebaut sein kann. Dieser Bereich B ist besonders für Sensorvorrichtungen 1, 1' geeignet, die außer der Bestimmung des Abstandes zur Fahrbahnoberfläche auch einer anderen Funktion dienen. Wie durch die gestrichelten Pfeile in Figur 2 angedeutet, kann nämlich in dieser Position neben einer Messung nach unten, d.h. in die negative z-Richtung, beispielsweise auch eine Messung nach vorne, d.h. in y-Richtung, erfolgen.

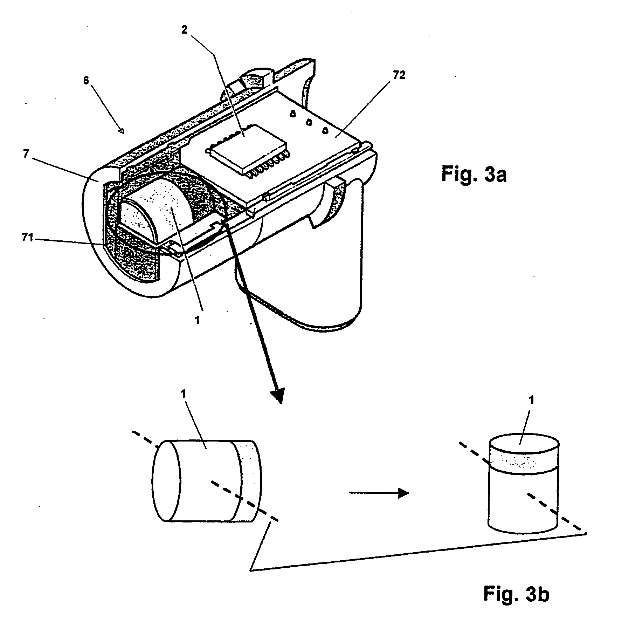

In Figuren 3a und 3b ist eine Sensorvorrichtung 1 schematisch dargestellt, die zum Beispiel für einen Einbau in der in Figur 2 gezeigten unteren vorderen Kante des Stoßfängers 3 geeignet ist.

Die Sensorvorrichtung 1 ist in einem Gehäuse 7 angeordnet, das einen im wesentlichen hohlen, zylindrischen Aufbau aufweist. An einem Ende des Gehäuses ist eine Öffnung 71 vorgesehen, durch die ein Austreten von Signalen, insbesondere Wellen, ermöglicht wird. Im Inneren des Gehäuses 7 ist in der Nähe der Öffnung 71 eine Sensorvorrichtung 1 angeordnet, die ebenfalls einen zylindrischen Aufbau aufweist, aber im Vergleich zu dem Gehäuse 7 einen wesentlich geringeren Durchmesser besitzt. Auf der der Öffnung 71 abgewandten Seite der Sensorvorrichtung 1 ist eine Halterung 72 vorgesehen, auf der eine Verarbeitungseinheit 2, in Form einer Verarbeitungselektronik, getragen wird. Die Verarbeitungseinheit 2 ist mit der Sensorvorrichtung verbunden und kann die von der Sensorvorrichtung erfassten Werte empfangen. An der Mantelfläche der im wesentlichen zylindrischen Sensorvorrichtung 1 sind auf gegenüberliegenden Seiten sich längs erstreckende, von der Sensorvorrichtung 1 radial hervorstehende Halterungen vorgesehen, die eine Drehung der Sensorvorrichtung um zumindest 90° erlauben. In Figur 3a nicht erkennbar ist vorzugsweise in dem Gehäuse 7 zusätzlich zu der Öffnung 71 eine Öffnung vorgesehen, die sich unterhalb der eingebauten Sensorvorrichtung befindet und durch die die Sensorvorrichtung 1 nach einer Drehung um 90° in die negative z-Richtung Signale, insbesondere Wellen, aussenden und empfangen kann.

Die Sensoreinheit 1 ist in Figur 3a in der Position gezeigt, in der diese Signale, wie beispielsweise Ultraschallwellen, in die horizontale Richtung (y-Richtung) aussenden und aus dieser Richtung reflektierte Signale empfangen kann. In dieser Position kann die Sensorvorrichtung 1 als Einparkhilfe verwendet werden. Dazu wird die Sensorvorrichtung 1 mit einer Auswerteeinheit 2 verbunden. Diese Auswerteeinheit 2 kann eine Auswertelektronik darstellen. Die Auswerteinheit 2 kann aber auch dazu verwendet werden, die von dem Sensor 1 erfassten Werte in die Längsneigung des Fahrzeugs umzurechnen. In diesem Fall ist die Sensorvorrichtung 1 so ausgelegt, dass diese rotiert werden kann, um sowohl Messungen in die Fahrtrichtung als auch Messungen nach unten, d.h. zur Fahrbahnoberfläche 4, ausführen zu können.

Hierzu kann die Sensorvorrichtung 1 beispielsweise durch einen Motor (nicht dargestellt), wie beispielsweise einen Elektromotor, in die gewünschte Position rotiert werden. Die Achse um die die Sensorvorrichtung gedreht werden kann liegt dabei vorzugsweise in der x Richtung, d.h. senkrecht zu der y- und der z-Richtung. Die durch die Sensorvorrichtung 1 einnehmbaren Positionen sind in Figur 3b dargestellt. In der links dargestellten Position werden Messungen in die y-Richtung durchgeführt. In der rechts dargestellten Position, die um 90° zu der linken Position verdreht ist, kann die Sensorvorrichtung Messungen in die negative z-Richtung, d.h. zu der Fahrbahnoberfläche 4 durchführen.

Damit können von der Sensorvorrichtung 1 sowohl Werte erfasst werden, die für die Steuerung einer Einparkhilfe verwendet werden können, als auch Werte, die zur Ermittlung der Längsneigung des Fahrzeugs dienen können. Sollen die Werte der Längsneigung des Fahrzeugs für die Leuchtweitenregulierung der Scheinwerfer verwendet werden, um beispielsweise ein Blenden entgegenkommender Fahrzeuge zu verhindern, ist die in Figur 3a dargestellte Vorrichtung 6 zur Ermittlung der Längsneigung vorzugsweise mit einer Steuereinheit verbunden, die die Abstrahlrichtung der Scheinwerfer reguliert.

Es liegt auch im Rahmen der Erfindung diese Steuereinheit mit der Verarbeitungseinheit, in der die Längsneigungswerte ermittelt werden, zusammenzufassen.

Unter Bezugnahme auf die Figuren soll nun die Funktionsweise einer möglichen Ausführungsform der erfindungsgemäßen Vorrichtung zur Bestimmung der Längsneigung des Fahrzeugs beschrieben werden, bei der zumindest Teile alternativ auch für Einparkhilfen verwendet werden können.

Während der Fahrt des Fahrzeugs sind die Sensorvorrichtungen 1, 1' vorzugsweise so eingestellt, dass diese Signale, z.B. Ultraschall, in die Richtung der Fahrbahnoberfläche 4 ausstrahlen können. Diese Ausstrahlung erfolgt über eine in der Sensorvorrichtung 1 vorgesehene Sendeeinheit. Die Wellen werden an der Fahrbahnoberfläche 4 reflektiert und an die Sensorvorrichtung 1 zurückübertragen. Diese Sensorvorrichtung 1 nimmt die reflektierten Wellen mittels eines in der Sensorvorrichtung vorgesehenen Empfängers auf. Aus dem Vergleich der Werte der ausgestrahlten Wellen mit denen der reflektierten Wellen wird der Abstand der Fahrzeugkarosserie, insbesondere des Einbauortes der Sensorvorrichtung 1, zu der Fahrbahnoberfläche 4 bestimmt. Dieser Wert wird wahlweise mit einem vorgegebenen Referenzwert oder einem über eine am anderen Ende des Fahrzeugs 5 vorgesehene Sensorvorrichtung 1' ermittelten Wert verglichen. Daraus wird in der Verarbeitungseinheit 2 die Längsneigung des Fahrzeugs 5 bestimmt. Dieser Neigungswert wird an eine Steuereinheit zur Einstellung des Abstrahlwinkels der Fahrzeugscheinwerfer geliefert, die aufgrund dieses Wertes die winkelmäßige Position der Scheinwerfer so einstellt, dass dadurch beispielsweise ein Blenden entgegenkommender Fahrzeuge vermieden werden kann.

Soll das Fahrzeug eingeparkt werden, kann die Sensorvorrichtung 1, 1' in eine um 90° gedrehte Position gebracht werden, um mit dieser dann Abstandsmessungen nach vorne bzw. nach hinten durchführen zu können. Diese Umstellung kann manuell erfolgen, oder beispielsweise beim Einlegen des Rückwärtsgangs automatisch erfolgen. Vorzugsweise wird die Drehung der Sensorvorrichtung 1, 1' in die gewünschte Position über Elektromotoren bewirkt.

Nachdem die Sensorvorrichtung 1, 1' in die für eine Messung in horizontaler Richtung notwendige Position gebracht wurde, sendet diese erneut Signale in Form von Wellen aus, die dann an vor bzw. hinter dem Fahrzeug befindlichen Objekten reflektiert werden und an die Sensorvorrichtung zurückübertragen werden können. Aus den Werten der reflektierten Wellen ermittelt die Sensorvorrichtung den Abstand zu einem vor oder hinter dem Fahrzeug befindlichen Objekt. Dieser Abstandswert wird an eine Steuereinheit der Einparkhilfe übertragen, die beispielsweise beim Unterschreiten eines vorgegebenen Werts ein Alarmsignal auslöst oder andere Maßnahmen einleitet.

Wie sich der vorstehenden Beschreibung einer Ausführungsform der erfindungsgemäßen Vorrichtung entnehmen lässt kann ein Großteil der für die Bestimmung der Längsneigung notwendigen Teile auch für andere Zwecke, wie beispielsweise für Einparkhilfen, verwendet werden. So kann die Sensorvorrichtung, sofern diese drehbar oder schwenkbar gelagert ist, für beide Zwecke verwendet werden. Auch die Verarbeitungseinheit kann für beide Anwendungen eingesetzt werden. So ist beispielsweise die Ermittlung des Abstandes aus den reflektierten Signalen für beide Anwendungen identisch. Lediglich die weitere Verarbeitung der Abstandswerte und die Ansteuerung von Steuergeräten unterscheidet sich bei den beiden Anwendungen und wird vorzugsweise durch unterschiedliche Einheiten durchgeführt. Die Möglichkeit, eine Vielzahl von Mitteln für mehr als eine Anwendung einzusetzen, resultiert in einer Gewichtseinsparung.

Die beschriebene Ausführungsform stellt nur eine mögliche Ausgestaltung der Vorrichtung dar. Es liegt aber eine Vielzahl von Ausgestaltungen im Rahmen der Erfindung. So kann beispielsweise die Anzahl der verwendeten Sensorvorrichtungen beliebig variiert werden. Bevorzugt werden allerdings eine, zwei oder vier Sensorvorrichtungen verwendet. Die Sensorvorrichtungen können Ultraschallsensoren, Mikrowellensensoren oder andere Sensoren für das Ausgeben und Empfangen von Signalen und elektromagnetischen Wellen umfassen. Auch die bekannte Abhängigkeit von Ultraschall hat auf die Funktionsfähigkeit der erfindungsgemäßen Vorrichtung keinen Einfluss, da die Sensoren vorzugsweise im vorderen und hinteren Bereich des Fahrzeugs angebracht werden und die Geschwindigkeit an diesen beiden Positionen gleich ist.

Weiterhin kann die Verarbeitung der von der Sensoreinheit empfangenen Werte in unterschiedlicher Art erfolgen, wobei die Differenzbildung zwischen einem gemessenen Abstandswert zur Fahrbahnoberfläche und einem an einer anderen Stelle des Fahrzeugs gemessenen Abstandswert bevorzugt ist. Obwohl in den oben beschriebenen Ausführungsformen die Verarbeitung der von den Sensorvorrichtungen erfassten Werte in einer Verarbeitungseinheit erfolgt und diese Verarbeitungsergebnisse an eine Steuereinheit weitergeleitet werden, liegt es auch im Rahmen der Erfindung, die von den Sensorvorrichtungen erfassten Werte unmittelbar an die Steuereinheit weiterzuleiten und diese dort zu verarbeiten.

Die Möglichkeit der Mehrzweck-Verwendung der Einrichtung als Längsneigungsbestimmung und Einparkhilfe ist aber nur gegeben, wenn die Sensorvorrichtungen an dem vorderen und/oder dem hinteren Ende des Fahrzeugs vorgesehen sind. Diese Anordnung bringt aber noch weitere Vorteile mit sich, die auch genutzt werden können, wenn die Sensorvorrichtung nicht drehbar gelagert ist. Insbesondere wird eine größere Abstützlänge geschaffen und dadurch die Bestimmung der Längsneigung präzisiert. Weiterhin kann eine Einsparung an Bauteilen, insbesondere gegenüber herkömmlichen Bestimmungseinheiten der Längsneigung, erzielt werden, die beispielsweise ein Gestänge an den Lenkern aufweisen, mittels dessen die Werte für die Leuchtweitenregulierung mit Potentiometern abgegriffen werden. Gegenüber solchen Vorrichtungen kann mit der erfindungsgemäßen Vorrichtung auch eine Verringerung der Masse an den Lenkern erzielt werden. Auch eine aktive Fahrdynamikregulierung (Aktive Body Control) kann unter Verwendung der erfindungsgemäßen Vorrichtung durchgeführt werden, wenn in der Vorrichtung vier Sensorvorrichtungen (vorne links, vorne rechts, hinten links, hinten rechts) vorgesehen sind. Weiterhin kann aufgrund des Einbauortes der erfindungsgemäß verwendeten Sensorvorrichtungen der Montageaufwand verringert werden. Schließlich läßt sich bei geeigneter Anordnung mit der erfindungsgemäßen Vorrichtung der Abstand des Fahrzeugs zu einem Bordstein ermitteln. Dies ist besonders beim Parken des Fahrzeugs von Vorteil, um das Fahrzeug genau im richtigen Abstand zum Bordstein abzustellen, ohne die bordsteinzugewandten Felgen oder Reifen durch Bordsteinkontakt zu beschädigen.

## Patentansprüche

1. Vorrichtung zur Bestimmung der Längsneigung eines Fahrzeugs (5), **dadurch gekennzeichnet, dass** diese zumindest eine Sensorvorrichtung (1, 1') umfasst, die zumindest im Bereich zwischen dem vorderen Ende der Karosserie des Fahrzeugs (5) und der Vorderachse oder im Bereich zwischen dem hinteren Ende der Karosserie des Fahrzeugs (5) und der Hinterachse vorgesehen ist.

2. Vorrichtung gemäß Anspruch 1, **dadurch gekennzeichnet, dass** mindestens zwei Sensorvorrichtungen (1, 1') vorgesehen sind, wobei mindestens eine der Sensorvorrichtungen (1, 1') im Bereich zwischen dem vorderen Ende der Karosserie des Fahrzeugs (5) und der Vorderachse und die mindestes eine weitere der Sensorvorrichtungen (1, 1') im Bereich zwischen dem hinteren Ende der Karosserie des Fahrzeugs (5) und der Hinterachse vorgesehen ist.

3. Vorrichtung nach einem der Ansprüche 1 oder 2, **dadurch gekennzeichnet, dass** die Sensorvorrichtung (1, 1') im Bereich eines Stoßfängers (3) vorgesehen ist.

4. Vorrichtung nach einem der Ansprüche 1 bis 3, **dadurch gekennzeichnet, dass** die Sensorvorrichtung (1, 1') zumindest einen Sender und einen Empfänger umfasst.

5. Vorrichtung nach einem der Ansprüche 1 bis 4, **dadurch gekennzeichnet, dass** die Sensorvorrichtung (1, 1') so ausgelegt ist, dass diese Messwerte erfassen kann, die für die Bestimmung des Abstandes von mindestens einem Punkt der Karosserie des Fahrzeugs (5) zu einer Fahrbahnoberfläche (4), auf der sich das Fahrzeug (5) befindet, verwendet werden können.

6. Vorrichtung nach einem der Ansprüche 1 bis 5, **dadurch gekennzeichnet, dass** diese mindestens eine Verarbeitungseinheit (2) zur Verarbeitung der durch die mindestens eine Sensorvorrichtung (1, 1') erfassten Messwerte aufweist.

7. Vorrichtung nach einem der Ansprüche 1 bis 6, **dadurch gekennzeichnet, dass** die Sensorvorrichtung (1, 1') einen Ultraschallsensor umfasst

8. Vorrichtung nach einem der Ansprüche 1 bis 6, **dadurch gekennzeichnet, dass** die Sensorvorrichtung (1, 1') einen Mikrowellensensor umfasst.

9. Vorrichtung nach einem der Ansprüche 1 bis 8, **dadurch gekennzeichnet, dass** diese mit einer Steuereinheit zur Leuchtweitenregulierung verbunden ist.

10. Vorrichtung nach einem der Ansprüche 1 bis 9, **dadurch gekennzeichnet, dass** die Sensorvorrichtung (1, 1') bezüglich der Richtung, in der diese Messungen durchführen kann, verstellbar ist.

11. Vorrichtung nach Anspruch 10, **dadurch gekennzeichnet, dass** die Sensorvorrichtung (1, 1') mit einer Steuervorrichtung zur Einparkhilfe verbunden ist.

12. Verfahren zur Bestimmung des Neigungswinkels eines Fahrzeugs (5), wobei das Verfahren umfasst, dass von mindestens einer Sensorvorrichtung (1, 1'), die zumindest im Bereich zwischen dem vorderen Ende der Karosserie des Fahrzeugs (5) und der Vorderachse oder im Bereich zwischen dem hinteren Ende der Karosserie des Fahrzeugs (5) und der Hinterachse vorgesehen ist, mindestens ein Messwert, der den Abstand des Fahrzeugs zu der Fahrbahnoberfläche wiedergibt, ermittelt wird, dieser an eine Verarbeitungseinheit weitergeleitet wird und in dieser Verarbeitungseinheit der Neigungswinkel aus den ermittelten Messwerten bestimmt wird.

13. Verfahren zur Leuchtweitenregulierung bei dem Messwerte, die von zumindest einer Sensorvorrichtung (1, 1'), die zumindest im Bereich zwischen dem vorderen Ende der Karosserie des Fahrzeugs (5) und der Vorderachse oder im Bereich zwischen dem hinteren Ende der Karosserie des Fahrzeugs (5) und der Hinterachse vorgesehen ist, ermittelt werden und an eine Verarbeitungseinheit zur Ermittlung der Längsneigung des Fahrzeugs (5) geliefert werden, zur Steuerung der Leuchtweitenregulierung verwendet werden.
